# FASCICULE DE BREVET EUROPEEN

(11) **EP 0 703 949 B1**
(45) Date de publication et mention de la délivrance du brevet: **10.06.1998**
(21) Numéro de dépôt: 95917406.1
(22) Date de dépôt: 14.04.1995
(51) Int. Cl.: C08L 95/00, C08K 3/24

(54) **PREPARATION DE COMPOSITIONS BITUME/POLYMERE, LEUR UTILISATION**
HERSTELLUNG VON BITUMEN/POLYMERZUSAMMENSETZUNGEN UND IHRE VERWENDUNG
PREPARATION OF BITUMEN/POLYMER COMPOSITIONS, AND USE THEREOF

(30) Priorité: 18.04.1994 FR 9404577
(43) Date de publication de la demande: 03.04.1996
(73) Titulaire: ELF ANTAR FRANCE, 92400 Courbevoie (FR)
(72) Inventeur: GERMANAUD, Laurent, F-38540 Heyrieux (FR); PLANCHE, Jean-Pascal, F-38540 Saint-Just-Chaleyssin (FR); TURELLO, Patrick, F-69340 Francheville (FR)
(74) Mandataire: Boillot, Marc
(86) Numéro de dépôt international: FR9500497
(87) Numéro de publication internationale: WO9528446

(56) Documents cités:
- EP-A- 0 096 638
- EP-A- 0 360 656
- DE-A- 2 255 173
- FR-A- 2 376 188
- US-A- 5 070 123

## Description

L'invention a trait à un procédé de préparation de compositions bitume/polymère à caractère multigrade renforcé, lesdites compositions étant utilisables dans la production de liants bitume/polymère pour revêtements et notamment pour revêtements routiers ou pour revêtements d'étanchéité.

Par compositions bitume/polymère à caractère multigrade renforcé, on entend, selon l'invention, des compositions bitume/polymère qui présentent un large intervalle de plasticité. Ledit intervalle est défini comme la différence entre la température de ramollissement bille et anneau (en abrégé TBA), révélatrice des propriétés à chaud du liant ou composition bitume/polymère, et le point de fragilité Fraass, révélateur des propriétés à froid de la composition bitume/polymère. Le liant bitumineux consistant en/ou à base de la composition bitume/polymère résistera d'autant mieux aux sollicitations à chaud et à froid que l'intervalle de plasticité est plus large.

Les grandeurs température de ramollissement bille et anneau (TBA) et point de fragilité Fraass mentionnées plus haut sont déterminées par des procédures normalisées comme indiqué ci-après :
- température de ramollissement bille et anneau :
   déterminée selon la norme NF T 66 008 et exprimée en °C ;
- point de fragilité Fraass :
   déterminé selon la norme NF T 66026 et exprimé en °C.

La réticulation, par le soufre, d'élastomères portant des insaturations, notamment de copolymères de styrène et d'un diène conjugué tel que butadiène ou isoprène, au sein de bitumes conduit à des compositions bitume/polymère, qui possèdent une stabilité améliorée et d'excellentes caractéristiques physicomécaniques et qui sont utilisables pour la réalisation de revêtements divers, notamment revêtements superficiels routiers, enrobés ou encore revêtements d'étanchéité, présentant des caractéristiques améliorées par rapport aux revêtements obtenus à partir de bitumes seuls.

La préparation de compositions bitume/polymère du type précité, pour lesquelles l'élastomère réticulable au soufre est un copolymère de styrène et d'un diène conjugué, est décrite, notamment, dans les citations FR-A-2376188, FR-A-2528439 et EP-A-0360656.

On sait encore que l'on peut améliorer les propriétés de compositions bitumineuses consistant en mélanges de bitumes et de copolymères blocs de styrène et d'un diène conjugué, notamment copolymères blocs de styrène et de butadiène, en incorporant auxdites compositions une petite quantité d'un acide minéral non oxydant tel que l'acide phosphorique (DE-A-2255173). Les résultats obtenus peuvent être améliorés si l'acide est ajouté au bitume avant de lui incorporer le copolymère bloc (US-A-5070123).

On a maintenant trouvé que l'on pouvait élargir l'intervalle de plasticité des compositions bitume/polymère réticulées au soufre, en incorporant à ces compositions, après la phase de réticulation au soufre, un adjuvant minéral du type acide ou anhydride d'acide.

Ce résultat présente un caractère inattendu au vu d'observations, faites par la Demanderesse, que la réticulation au soufre de mélanges d'un bitume et d'un copolymère bloc de styrène et de diène conjugué renfermant déjà l'adjuvant minéral du type acide ou anhydride d'acide, incorporé au bitume avant l'addition du copolymère ou bien ajouté au mélange du bitume et du copolymère , conduit à des compositions bitume/polymère ne possédant pas les caractéristiques améliorées des compositions bitume/polymère obtenues par le procédé faisant l'objet de l'invention, c'est-à-dire consistant à incorporer l'adjuvant minéral à la composition bitume/polymère venant de subir la réticulation au soufre.

Les compositions bitume/polymère obtenues par le procédé selon l'invention présentent un intervalle de plasticité élargi, une contrainte à la rupture plus élevée et un module élastique amélioré.

Le procédé selon l'invention pour la préparation de compositions bitume/polymère à caractère multigrade renforcé, c'est-à-dire présentant, entre autres, un intervalle de plasticité élargi, est du type dans lequel on met en contact, en opérant à des températures comprises entre 100°C et 230°C et sous agitation pendant une durée d'au moins 10 minutes, un bitume ou mélange de bitumes avec, comptés en poids du bitume ou mélange de bitumes, 0,5 % à 20 % d'un élastomère réticulable au soufre et un agent de couplage donneur de soufre en quantité propre à fournir une quantité de soufre libre représentant 0,1 % à 20 % du poids de l'élastomère réticulable au soufre dans le milieu réactionnel formé des ingrédients bitume ou mélange de bitumes, élastomère et agent de couplage, pour produire une composition réticulée au soufre et il se caractérise en ce qu'au milieu réactionnel résultant de la vulcanisation au soufre , maintenu à une température comprise entre 100°C et 230°C et sous agitation, on incorpore 0,005 % à 5 %, en poids du bitume, d'un adjuvant minéral consistant en au moins un composé choisi dans le groupe formé par les acides phosphoriques, les acides boriques, l'acide sulfurique, les anhydrides desdits acides et l'acide chlorosulfurique et l'on maintient le milieu réactionnel renfermant l'adjuvant minéral à la température comprise entre 100°C et 230°C et sous agitation pendant une durée d'au moins 20 minutes.

De préférence, l'élastomère réticulable au soufre est employé en quantité représentant 0,7% à 15% en poids du bitume ou mélange de bitumes.

De même, l'agent de couplage donneur de soufre est utilisé en quantité propre à fournir une quantité de soufre libre représentant 0,5% à 10% du poids de l'élastomère réticulable au soufre.

De préférence, la quantité d'adjuvant minéral incorporée au milieu réactionnel résultant de la réticulation au soufre, représente 0,01% à 2% en poids du bitume ou mélange de bitumes.

Parmi les composés mentionnés ci-dessus, qui sont susceptibles, seuls ou en mélanges, de constituer l'adjuvant minéral que l'on incorpore au milieu réactionnel résultant de la vulcanisation au soufre du mélange de bitume ou bitumes et d'élastomère réticulable au soufre , on peut citer les composés choisis parmi H₃PO₄, P₂O₅, H₃BO₃, B₂O₃, H₂SO₄, SO₃ et HSO₃Cl.

Le bitume ou mélange de bitumes, que l'on utilise dans le procédé selon l'invention, est choisi avantageusement parmi les divers bitumes qui possèdent une viscosité cinématique à 100°C comprise entre 0,5 x 10⁻⁴ m²/s et 3 x 10⁻² m²/s et de préférence entre 1 x 10⁻⁴ m²/s et 2 x 10⁻² m²/s. Ces bitumes peuvent être des bitumes de distillation directe ou de distillation sous pression réduite ou encore des bitumes soufflés ou semi-soufflés, voire même certaines coupes pétrolières ou des mélanges de bitumes et de distillats sous vide. Avantageusement, le bitume ou mélange de bitumes utilisé pour l'obtention des compositions selon l'invention, outre une viscosité cinématique comprise dans les intervalles précités, présente une pénétrabilité, définie suivant la norme NF T 66004, comprise entre 5 et 500 et préférence entre 10 et 400.

L'élastomère réticulable au soufre, que l'on utilise pour préparer les compositions bitume/polymère et que l'on retrouve réticulé dans lesdites compositions, peut être tel que polyisoprène, polynorbornène, polybutadiène, caoutchouc butyle, terpolymère éthylène/propylène/diène (EPDM). Avantageusement, ledit élastomère est choisi parmi les copolymères statistiques ou séquencés de styrène et d'un diène conjugué tel que butadiène, isoprène, chloroprène, butadiène carboxylé, isoprène carboxylé, et plus particulièrement consiste en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé. Le copolymère de styrène et de diène conjugué, et en particulier chacun des copolymères précités, possède avantageusement une teneur pondérale en styrène allant de 5 % à 50 %. La masse moléculaire moyenne en poids du copolymère de styrène et de diène conjugué, et notamment celle des copolymères mentionnés ci-dessus, peut être comprise, par exemple, entre 10 000 et 600 000 et se situe de préférence entre 30 000 et 400 000. De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires moyennes en poids situées dans les intervalles définis précédemment.

L'agent de couplage donneur de soufre, que l'on utilise dans la préparation des compositions bitume/polymère selon l'invention, peut consister en un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre. En particulier, l'agent de couplage donneur de soufre est choisi parmi les produits M, qui renferment, en poids, de 0 % à 100 % d'une composante A consistant en un ou plusieurs accélérateurs de vulcanisation donneurs de soufre et de 100 % à 0 % d'une composante B consistant en un ou plusieurs agents de vulcanisation choisis parmi le soufre élémentaire et les polysulfures d'hydrocarbyle, et les produits N, qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 0,5.

Le soufre élémentaire susceptible d'être utilisé pour constituer, en partie ou en totalité, l'agent de couplage est avantageusement du soufre en fleur et de préférence du soufre cristallisé sous la forme orthorhombique et connu sous le nom de soufre alpha.

Les polysulfures d'hydrocarbyle susceptibles d'être employés pour former une partie ou la totalité de l'agent de couplage peuvent être choisis parmi ceux qui sont définis dans la citation FR-A-2528439 et qui répondent à la formule générale 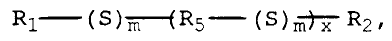 dans laquelle R₁ et R₂ désignent chacun un radical hydrocarboné monovalent, saturé ou insaturé, en C₁ à C₂₀ ou sont reliés entre eux pour constituer un radical hydrocarboné divalent en C₁ à C₂₀, saturé ou insaturé, formant un cycle avec les autres groupements d'atomes associés dans la formule, R₅ est un radical hydrocarboné divalent, saturé ou insaturé, en C₁ à C₂₀, les - (S)m - représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2 et x représente un nombre entier prenant les valeurs de zéro à 10. Des polysulfures préférés répondent à la formule R₃ - (S)ₚ - R₃, dans laquelle R₃ désigne un radical alkyle en C₆ à C₁₆, par exemple hexyle, octyle, dodécyle, tertiodocécyle, hexadécyle, nonyle, décyle, et - (S)ₚ - représente un groupement divalent formé par un enchaînement de p atomes de soufre, p étant un nombre entier allant de 2 à 5.

Lorsque l'agent de couplage renferme un accélérateur de vulcanisation donneur de soufre, ce dernier peut être choisi, en particulier, parmi les polysulfures de thiurame de formule 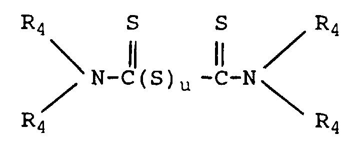 dans laquelle les R₄, identiques ou différents, représentent chacun un radical hydrocarboné en C₁ à C₁₂ et de préférence en C₁ à C₈, notamment radical alkyle, cycloalkyle ou aryle, ou bien deux radicaux R₄ fixés à un même atome d'azote sont reliés entre eux pour former un radical divalent hydrocarboné en C₂ à C₈ et u est un nombre allant de 2 à 8. Comme exemples de tels accélérateurs de vulcanisation, on peut citer notamment les composés disulfure de dipentaméthylène thiurame, tétrasulfure de dipentaméthylène thiurame, hexasulfure de dipentaméthylènethiurame, disulfure de tétrabutylthiurame, disulfure de tétraéthylthiurame et disulfure de tétraméthylthiurame.

Comme autres exemples d'accélérateurs de vulcanisation donneurs de soufre, on peut encore citer les disulfures d'alkylphénols et les disulfures tels que disulfure de morpholine et N,N'-disulfure de caprolactame.

Les accélérateurs de vulcanisation non donneurs de soufre utilisables pour former la composante C des agents de couplage de type produit N peuvent être des composés soufrés choisis notamment parmi le mercaptobenzothiazole et ses dérivés, notamment benzothiazole thiolates métalliques et surtout benzothiazolesulfénamides, les dithiocarbamates de formule 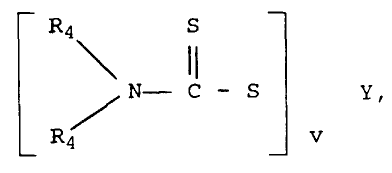 dans laquelle les R₄,
identiques ou différents, ont la signification donnée plus haut, Y représente un métal et v désigne la valence de Y, et les monosulfures de thiurame de formule 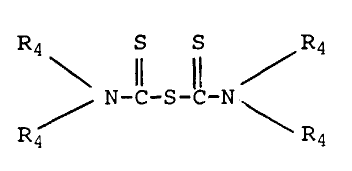 dans laquelle les R₄ ont la signification donnée plus haut.

Des exemples d'accélérateurs de vulcanisation du type des mercaptobenzothiazoles peuvent être tels que mercaptobenzothiazole, benzothiazole thiolate d'un métal tel que zinc, sodium, cuivre, disulfure de benzothiazyle, 2-benzothiazolepentaméthylènesulfénamide, 2-benzothiazolethiosulfénamide, 2-benzothiazoledihydrocarbylsulfénamides pour lesquelles le radical hydrocarbyle est un radical éthyle, isopropyle, tertiobutyle, cyclohexyle, et N-oxydiéthylène 2-benzothiazolesulfénamide.

Parmi les accélérateurs de vulcanisation du type des dithiocarbamates de formule précitée, on peut citer les composés diméthyldithiocarbamates de métaux tels que cuivre, zinc, plomb, bismuth et sélénium, diéthyldithiocarbamates de métaux tels que cadmium et zinc, diamyldithiocarbamates de métaux tels que cadmium, zinc et plomb et pentaméthylènedithiocarbamate de plomb ou zinc.

A titre d'exemples de monosulfures de thiurame ayant la formule donnée plus haut, on peut citer les composés tels que monosulfure de dipentaméthylènethiurame, monosulfure de tétraméthylthiurame, monosulfure de tétraéthylthiurame et monosulfure de tétrabutylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1,3 guanidine, diorthotolylguanidine et oxyde de zinc, ce dernier composé pouvant être employé éventuellement en présence d'acides gras du type acide stéarique, acide laurique, acide éthylcaproique.

Pour plus de détails sur les accélérateurs de vulcanisation donneurs de soufre et non donneurs de soufre utilisables dans la constitution de l'agent de couplage, on peut se référer aux citations EP-A-0360656 et EP-A-0409683, dont le contenu est incorporé à la présente description par référence, de même que le contenu de la citation FR-A-2528439.

De par sa composition, comme indiqué plus haut, l'agent de couplage peut être du type monocomposante ou du type multicomposante, l'agent de couplage du type multicomposante pouvant être formé préalablement à son utilisation ou encore produit in situ dans le milieu dans lequel il doit être présent. L'agent de couplage du type multicomposante préformé ou du type monocomposante ou les composantes de l'agent de couplage du type multicomposante formé in situ peuvent être mis en oeuvre tels quels, par exemple à l'état fondu, ou bien en mélange, par exemple en solution ou en suspension, avec un diluant, par exemple un composé hydrocarboné.

Le procédé de préparation des compositions bitume/polymère selon l'invention est avantageusement mis en oeuvre en mettant tout d'abord en contact l'élastomère réticulable au soufre avec le bitume ou mélange de bitumes, en utilisant une proportion d'élastomère, par rapport au bitume ou mélange de bitumes, choisie comme défini précédemment pour cette proportion, en opérant à des températures comprises entre 100°C et 230°C, plus particulièrement entre 120°C et 190°C, et sous agitation, pendant une durée suffisante, généralement de l'ordre de quelques dizaines de minutes à quelques heures et par exemple de l'ordre de 1 heure à 8 heures, pour former un mélange homogène, puis en incorporant au dit mélange l'agent de couplage donneur de soufre en quantité appropriée choisie dans les intervalles définis plus haut pour ladite quantité et en maintenant le tout sous agitation à des températures comprises entre 100°C et 230°C, plus particulièrement entre 120°C et 190°C, et identiques ou non aux températures de mélange de l'élastomère avec le bitume ou mélange de bitumes, pendant une durée au moins égale à 10 minutes et généralement allant de 10 minutes à 5 heures, plus particulièrement de 30 minutes à 180 minutes, pour former un produit de réaction constituant la composition bitume/polymère réticulée, et enfin, au dit produit de réaction, maintenu à une température comprise entre 100°C et 230°C, plus particulièrement entre 120°C et 190°C, et sous agitation, on incorpore l'adjuvant minéral en quantité désirée, choisie dans les intervalles définis précédemment pour ladite quantité, et l'on maintient le milieu réactionnel renfermant l'adjuvant minéral à la température comprise entre 100°C et 230°C, plus particulièrement entre 120°C et 190°C, et sous agitation pendant une durée allant de 20 minutes à 5 heures, plus particulièrement de 30 minutes à 4 heures, pour former la composition bitume/polymère à intervalle de plasticité élargi.

Le mélange réactionnel formé du bitume ou mélange de bitumes, de l'élastomère réticulable au soufre et de l'agent de couplage donneur de soufre, qui conduit à la composition bitume/polymère réticulée que l'on soumet ensuite à l'action de l'adjuvant minéral, peut être encore additionné de 1 % à 40 % et plus particulièrement de 2 % à 30 %, en poids du bitume, d'un agent fluxant, qui peut consister, notamment, en une huile hydrocarbonée présentant un intervalle de distillation à pression atmosphérique déterminé selon la norme ASTM D 86-67, compris entre 100°C et 600°C et situé plus spécialement entre 150°C et 400°C. Cette huile hydrocarbonée, qui peut être notamment une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume/polymère la contenant, de manière à retrouver les mêmes propriétés mécaniques qu'aurait présentées, après répandage à chaud, la composition bitume/polymère préparée sans utiliser d'agent fluxant. L'agent fluxant peut être ajouté au milieu réactionnel que l'on forme à partir du bitume, de l'élastomère réticulable au soufre et de l'agent de couplage donneur de soufre, à un moment quelconque de la constitution dudit milieu réactionnel, la quantité d'agent fluxant étant choisie, dans les intervalles définis plus haut, pour être compatible avec l'usage final désiré sur le chantier.

Au milieu réactionnel formé du bitume ou mélange de bitumes, de l'élastomère réticulable au soufre, de l'agent de couplage donneur de soufre et éventuellement de l'agent fluxant, qui sert à produire la composition bitume/polymère réticulée que l'on traite ensuite par l'adjuvant minéral, on peut encore ajouter, à un moment quelconque de la constitution dudit milieu réactionnel, des additifs divers et notamment des composés azotés du type amine ou amide comme ceux définis dans la citation EP-A-0409683, à titre de promoteurs d'adhésion de la composition bitume/polymère finale aux surfaces minérales, lesdits composés azotés étant incorporés au dit milieu réactionnel, de préférence, avant l'addition de l'agent de couplage donneur de soufre à ce milieu réactionnel, de manière à ce que ces composés azotés soient greffés sur l'élastomère réticulé présent dans la composition bitume/polymère finale.
Le milieu constitué du bitume ou mélange de bitumes, de l'élastomère réticulable au soufre, de l'agent de couplage donneur de soufre et éventuellement de l'agent fluxant, à partir duquel on forme la composition bitume/polymère réticulée soumise ensuite à l'action de l'adjuvant minéral, peut également renfermer, en poids du bitume ou mélange de bitumes, 0,1 % à 5 % et de préférence 0,2 % à 3 % d'un additif antigélifiant, ajouté audit milieu avantageusement avant l'incorporation de l'agent de couplage donneur de soufre, lequel additif antigélifiant répond à la formule R-X, dans laquelle R est un radical hydrocarboné monovalent saturé ou insaturé en C₂ à C₅₀ et plus particulièrement en C₂ à C₄₀, par exemple radical alkyle, alkényle, alkylaryle, alkadiényle, alkatriényle ou encore radical du type polycyclique à cycles condensés, et X représente un groupement fonctionnel 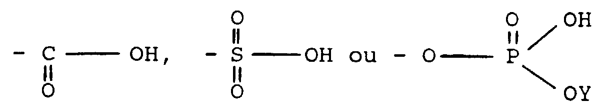 avec Y désignant un atome d'hydrogène ou un radical R. L'additif antigélifiant peut être choisi en particulier parmi les acides carboxyliques à chaîne grasse saturée ou insaturée, notamment acide pélargonique, acide laurique, acide stéarique, acide palmitique, acide oléique, les acides alkylarènesulfoniques portant une ou deux chaînes grasses saturées ou insaturées sur le noyau, notamment acide nonylbenzènesulfonique, acide dodécylbenzènesulfonique, acide didodécylbenzènesulfonique, les acides polycycliques a cycles condensés, notamment acide abiétique et acides résiniques en dérivant, les monohydrocarbylesters et dihydrocarbylesters de l'acide phosphorique encore appelés acides monohydrocarbylphosphoriques et dihydrocarbylphosphoriques, notamment acides monoalkylphosphoriques et acides dialkylphosphoriques pour lesquels le radical alkyle est en C₂ à C₁₈, par exemple éthyle, éthyl-2 hexyle, octyle, nonyle, décyle, dodécyle, hexadécyle, octadécyle, les mélanges d'acides carboxyliques à chaîne grasse et les mélanges d'acides abiétique ou résiniques et d'acides carboxyliques à chaîne grasse.

Dans une forme de mise en oeuvre du procédé selon l'invention utilisant une huile hydrocarbonée telle que définie plus haut, à titre d'agent fluxant, l'élastomère réticulable au soufre et l'agent de couplage donneur de soufre sont incorporés au bitume ou mélange de bitumes sous la forme d'une solution mère de ces produits dans l'huile hydrocarbonée constituant l'agent fluxant.

La solution mère est préparée par mise en contact des ingrédients la composant, à savoir huile hydrocarbonée servant de solvant, élastomère et agent de couplage, sous agitation, à des températures comprises entre 10°C et 170°C et plus particulièrement entre 40°C et 120°C, pendant un temps suffisant, par exemple d'environ 30 minutes à environ 90 minutes, pour obtenir une dissolution complète de l'élastomère et de l'agent de couplage dans l'huile hydrocarbonée.

Les concentrations respectives de l'élastomère et de l'agent de couplage dans la solution mère peuvent varier assez largement en fonction notamment de la nature de l'huile hydrocarbonée utilisée pour dissoudre l'élastomère et l'agent de couplage. Ainsi, les quantités respectives d'élastomère et d'agent de couplage peuvent représenter avantageusement 5 % à 40 % et 0,02 % à 15 % du poids de l'huile hydrocarbonée. Une solution mère préférée renferme, comptés en poids de l'huile hydrocarbonée employée comme solvant, 10 % à 35 % d'élastomère et 0,1 % à 5 % d'agent de couplage.

Pour préparer les compositions bitume/polymère selon l'invention en produisant, par la technique de la solution mère, la composition bitume/polymère réticulée au soufre, que l'on soumet ensuite à l'action de l'adjuvant minéral, on mélange la solution mère de l'élastomère et de l'agent de couplage avec le bitume ou mélange de bitumes, en opérant à une température comprise entre 100°C et 230°C et sous agitation, ceci étant effectué, par exemple, en ajoutant la solution mère au bitume ou mélange de bitumes maintenu sous agitation à la température entre 100°C et 230°C, puis on maintient le mélange résultant sous agitation à une température comprise entre 100°C et 230°C, par exemple à la température utilisée pour le mélange de la solution mère au bitume ou mélange de bitumes, pendant une durée au moins égale à 10 minutes, et généralement allant de 10 minutes à 90 minutes, pour former un produit de réaction constituant la composition bitume/polymère réticulée, et enfin, au dit produit de réaction, maintenu à une température comprise entre 100°C et 230°C, plus particulièrement entre 120°C et 190°C, et sous agitation, on incorpore l'adjuvant minéral en quantité désirée, choisie dans les intervalles définis précédemment pour ladite quantité, et l'on maintient le milieu réactionnel renfermant l'adjuvant minéral à la température comprise entre 100°C et 230°C, plus particulièrement entre 120°C et 190°C, et sous agitation pendant une durée allant de 20 minutes à 5 heures, plus particulièrement de 30 minutes à 4 heures, pour former la composition bitume/polymère à intervalle de plasticité élargi.

La quantité de solution mère mélangée au bitume ou mélange de bitumes est choisie pour fournir les quantités désirées, par rapport au bitume ou mélange de bitumes, d'élastomère et d'agent de couplage, lesdites quantités étant dans les fourchettes définies précédemment.

Une forme de mise en oeuvre particulièrement préférée pour la préparation, par la technique de la solution mère, de la composition bitume/polymère réticulée au soufre que l'on soumet ensuite à l'action de l'adjuvant minéral, consiste à mettre en contact, à une température comprise entre 100°C et 230°C et sous agitation, de 80 % à 95 % en poids de bitume ou mélange de bitumes avec 20 % à 5 % en poids de la solution mère, cette dernière renfermant, en poids de l'huile hydrocarbonée servant de solvant, 10 % à 35 % d'élastomère et 0,1 % à 5 % d'agent de couplage, puis à maintenir le mélange ainsi obtenu sous agitation à une température comprise entre 100°C et 230°C, et de préférence à la température utilisée pour la mise en contact du bitume ou mélange de bitumes avec la solution mère, pendant une durée au moins égale à 10 minutes et de préférence allant de 10 minutes à 60 minutes.

Les compositions bitume/polymère à caractère multigrade renforcé, c'est-à-dire à intervalle de plasticité élargi, obtenues par le procédé selon l'invention peuvent être utilisées telles quelles ou bien diluées avec des proportions variables d'un bitume ou mélange de bitumes ou d'une composition selon l'invention pour constituer des liants bitume/polymère ayant une teneur désirée en élastomère réticulé, qui peut être soit égale (composition non diluée) ou bien inférieure (composition diluée) à la teneur en élastomère réticulé des compositions bitume/polymère initiales correspondantes. La dilution des compositions bitume/polymère selon l'invention avec le bitume ou mélange de bitumes ou avec une composition selon l'invention de caractéristiques différentes peut être réalisée soit directement à la suite de l'obtention desdites compositions, lorsqu'une utilisation quasi immédiate des liants bitume/polymère résultants est requise, ou bien encore après une durée de stockage plus ou moins prolongée des compositions bitume/polymère, lorsqu'une utilisation différée des liants bitume/polymère résultants est envisagée. Le bitume ou mélange de bitumes utilisé pour la dilution d'une composition bitume/polymère selon l'invention peut être choisi parmi les bitumes définis précédemment comme convenant à la préparation des compositions bitume/polymère. Le cas échéant, le bitume ou mélange de bitumes utilisé pour la dilution peut avoir été lui-même préalablement traité par un adjuvant minéral selon l'invention.

La dilution d'une composition bitume/polymère selon l'invention par un bitume ou mélange de bitumes ou par une seconde composition selon l'invention à teneur plus faible en élastomère réticulé, pour former un liant bitume/polymère à teneur désirée en élastomère réticulé, inférieure à celle de la composition bitume/polymère à diluer, est généralement réalisée en mettant en contact, sous agitation à des températures comprises entre 100°C et 230°C et plus particulièrement entre 120°C et 190°C, des proportions convenables de la composition bitume/polymère à diluer et de bitume ou mélange de bitumes ou de seconde composition bitume/polymère selon l'invention. Par exemple, la quantité de bitume ou mélange de bitumes ou de seconde composition bitume/polymère utilisée pour la dilution peut être choisie pour que le liant bitume/polymère résultant de la dilution renferme une teneur en élastomère réticulé comprise entre 0,5 % et 5 %, plus particulièrement entre 0,7 % et 3 %, en poids du bitume et inférieure à la teneur en élastomère réticulé de la composition bitume/polymère selon l'invention soumise à la dilution.

Les liants bitume/polymère consistant en les compositions bitume/polymère selon l'invention ou résultant de la dilution desdites compositions par un bitume ou mélange de bitumes ou par une autre composition bitume/polymère selon l'invention, jusqu'à la teneur désirée en élastomère réticulé dans lesdits liants, sont applicables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

L'invention est illustrée par les exemples suivants donnés à titre non limitatif.

Dans ces exemples, les quantités et pourcentages sont exprimés en poids sauf indication contraire.

### EXEMPLES 1 A 8 :

On préparait des compositions bitume/polymère témoins (exemples 1 à 3 et 5 à 7) et des compositions bitume/polymère selon l'invention (exemples 4 et 8), pour en évaluer et comparer les caractéristiques physicomécaniques. On opérait dans les conditions suivantes.

Exemple 1 (témoin) : Préparation d'une composition bitume/polymère réticulée au soufre et non traitée par l'adjuvant minéral.

Dans un réacteur maintenu à 175°C et sous agitation, on introduisait 964 parties d'un bitume ayant une pénétrabilité, déterminée selon les modalités de la norme NF T 66004, de 80/100 et 35 parties d'un copolymère bloc de styrène et de butadiène ayant une masse moléculaire moyenne en poids égale à 100 000 daltons et renfermant 25 % de styrène. Après 2,5 heures de mélange sous agitation à 175°C, on obtenait une masse homogène.

A la masse homogène précitée, maintenue à 175°C, on ajoutait alors 1 partie de soufre cristallisé et on agitait encore l'ensemble à ladite température pendant 3 heures pour former une composition bitume/polymère réticulée.

Exemple 2 (témoin) : Préparation d'une composition bitume/polymère réticulée au soufre à partir d'un bitume prétraité par H₃PO₄.

On opérait comme décrit dans l'exemple 1, en faisant toutefois réagir le bitume, à 175°C et sous agitation, avec 5 parties d'acide phosphorique concentré pendant une durée égale à 2 heures, préalablement à la réalisation du mélange de bitume et de copolymère bloc.

Exemple 3 (témoin) : Préparation d'une composition bitume/polymère réticulée au soufre à partir d'un mélange de bitume et de copolymère bloc traité par H₃PO₄ avant réticulation par le soufre.

On opérait comme décrit dans l'exemple 1, en faisant toutefois réagir le mélange de bitume et de copolymère bloc, à 175°C et sous agitation, avec 5 parties d'acide phosphorique concentré pendant une durée égale à 2 heures, préalablement à l'introduction du soufre dans le mélange de bitume et de copolymère bloc.

Exemple 4 (selon l'invention) : Préparation d'une composition bitume/polymère réticulée au soufre et traitée ensuite par H₃PO₄.

On préparait une composition bitume/polymère comme décrit dans l'exemple 1, puis, une fois la réaction de réticulation par le soufre achevée, on ajoutait 5 parties d'acide phosphorique concentré au contenu du réacteur et maintenait le milieu réactionnel ainsi formé, à 175°C et sous agitation pendant une durée égale à 2 heures.

Exemple 5 (témoin) : Préparation d'une composition bitume/polymère réticulée au soufre à faible teneur en polymère et non traitée par l'adjuvant minéral.

On préparait une composition bitume/polymère à 3,5 % de copolymère bloc comme décrit dans l'exemple 1, puis on diluait la composition obtenue avec un bitume de pénétrabilité 80/100, en opérant à 175°C et sous agitation, de manière à ce que la teneur en copolymère de la composition diluée fût égale à 1,5 %.

Exemple 6 (témoin) : Préparation d'une composition bitume/polymère réticulée au soufre à faible teneur en polymère à partir d'un bitume prétraité par H₃PO₄.

Dans un réacteur maintenu à 175°C et sous agitation, on introduisait 960 parties d'un bitume de pénétrabilité 80/100 ainsi que 9,66 parties d'acide phosphorique concentré. Après 3 heures de réaction à ladite température, on ajoutait alors au contenu du réacteur 15 parties d'un copolymère bloc de styrène et de butadiène ayant les mêmes caractéristiques que le copolymère bloc utilisé dans l'exemple 1. Après 2,5 heures de mélange à 175°C et sous agitation, on obtenait une masse homogène. A cette masse homogène on ajoutait alors 0,41 partie de soufre cristallisé et agitait l'ensemble à ladite température pendant 1,5 heures pour former la composition bitume/polymère réticulée au soufre.

Exemple 7 (témoin) : Préparation d'une composition bitume/polymère réticulée au soufre à faible teneur en polymère à partir d'un mélange de bitume et de copolymère bloc traité par H₃PO₄ avant réticulation par le soufre.

On opérait comme décrit dans l'exemple 6, mais en introduisant l'acide phosphorique après incorporation complète du copolymère bloc au bitume et avant introduction du soufre au mélange réactionnel. La durée de réaction de H₃PO₄ sur le mélange de bitume et de copolymère bloc était égale à 3 heures.

Exemple 8 (selon l'invention) : Préparation d'une composition bitume/polymère à faible teneur en polymère réticulée au soufre et ensuite traitée par H₃PO₄.

On préparait une composition bitume/polymère comme décrit dans l'exemple 6, avec toutefois introduction de H₃PO₄ au milieu réactionnel résultant de la réticulation du mélange de bitume et de copolymère bloc par le soufre. La durée de la réaction de H₃PO₄ sur ledit milieu réactionnel, réalisée à 175°C et sous agitation, était égale à 3 heures.

Pour chacune des compositions bitume/polymère obtenues comme indiqué dans les exemples 1 à 8, on a déterminé, outre l'aspect desdites compositions, les caractéristiques suivantes :
- pénétrabilité à 25°C (Pen. 25)
- point de ramollissement bille et anneau (TBA)
- point de Fraass (Fraass)
- intervalle de plasticité (I. Plast.)
- caractéristiques rhéologiques en traction selon la norme NF T 46 002, à savoir :
   . contrainte à la rupture (σr)
   . allongement à la rupture (εr)

Les résultats obtenus, en fonction de l'ordre d'addition des réactifs, sont donnés dans le tableau I.

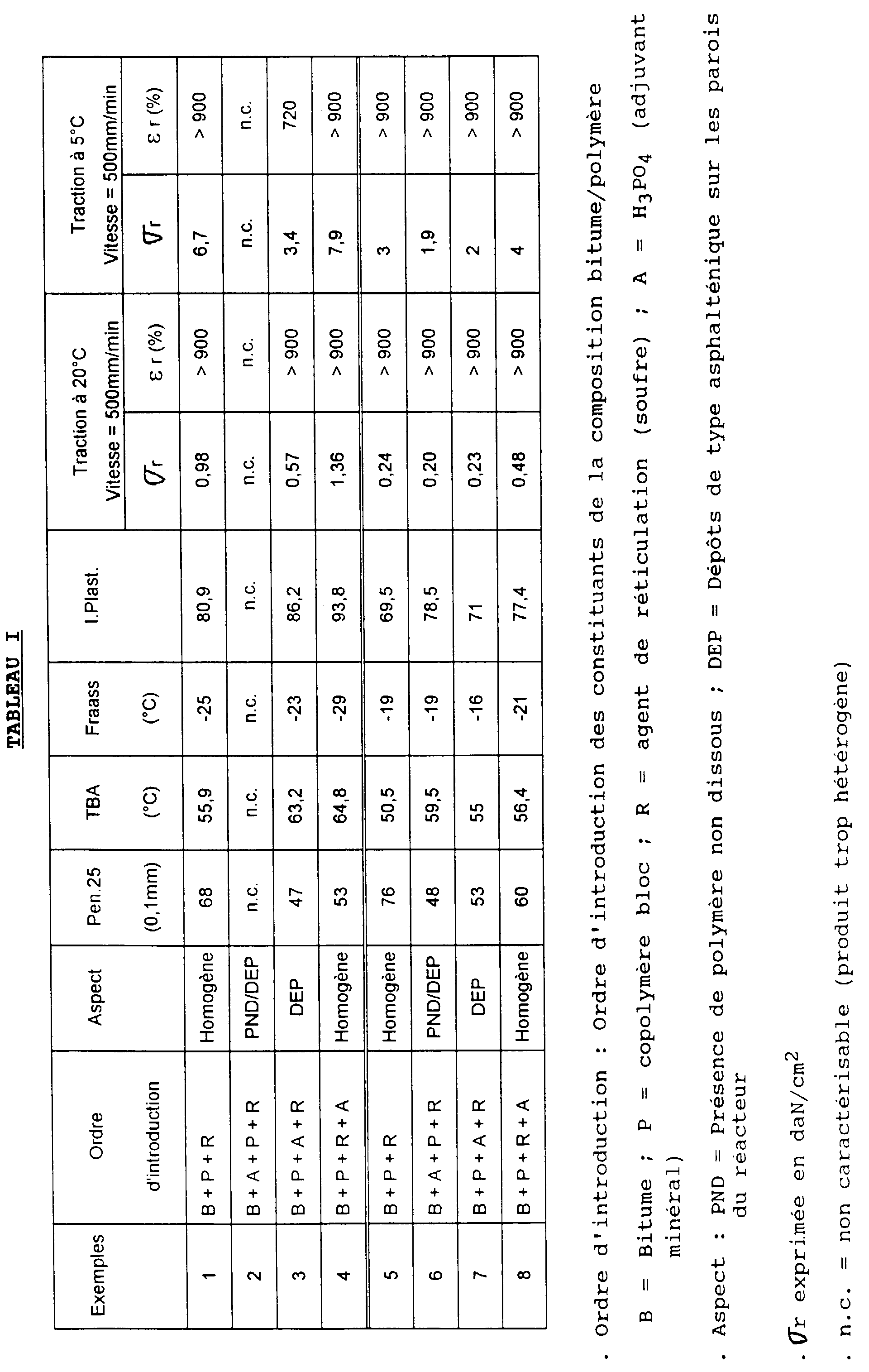

### EXEMPLES 9 A 14

En répétant les modes opératoires des exemples 2 à 4 et 6 à 8 avec toutefois remplacement de l'adjuvant minéral H₃PO₄ par l'adjuvant minéral H₂SO₄ utilisé en même quantité, on formait des compositions bitume/polymère témoins (exemples 9 à 10 et 12 à 13) et des compositions bitume/polymère selon l'invention (exemples 11 et 14), comme suit.

Exemple 9 (témoin) : Composition bitume/polymère réticulée au soufre à partir d'un bitume prétraité par H₂SO₄.

Exemple 10 (témoin) : Composition bitume/polymère réticulée au soufre à partir d'un mélange de bitume et de copolymère bloc traité par H₂SO₄ avant réticulation par le soufre.

Exemple 11 (selon l'invention) : Composition bitume/ polymère réticulée au soufre et traitée ensuite par H₂SO₄.

Exemple 12 (témoin) : Composition bitume/polymère réticulée au soufre à faible teneur en polymère à partir d'un bitume prétraité par H₂SO₄.

Exemple 13 (témoin) : Composition bitume/polymère réticulée au soufre à faible teneur en polymère à partir d'un mélange de bitume et de copolymère bloc traité par H₂SO₄ avant réticulation par le soufre.

Exemple 14 (selon l'invention) : Composition bitume/polymère à faible teneur en polymère réticulée au soufre et ensuite traitée par H₂SO₄.

Pour chacune des compositions bitume/polymère obtenues selon les exemples 9 à 14, on a déterminé, outre l'aspect desdites compositions, des caractéristiques analogues à celles déterminées sur les compositions bitume/polymère des exemples 1 à 8.

Les résultats obtenus, en fonction de l'ordre d'addition des réactifs, sont donnés dans le tableau II.

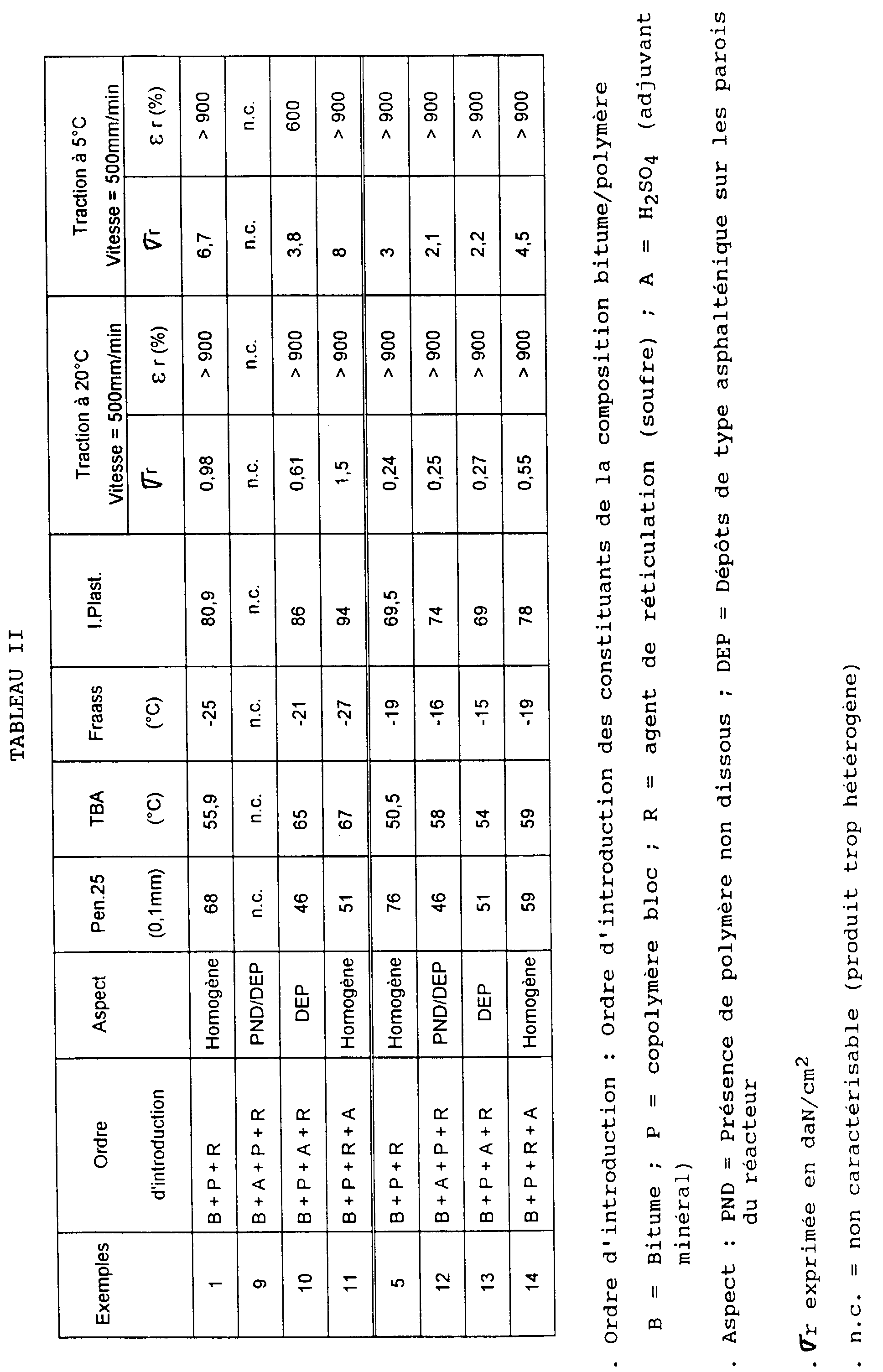

Au vu des caractéristiques rassemblées dans les tableaux I et II, il apparaît que :
- le traitement du bitume par l'adjuvant minéral, à savoir H₃PO₄ (tableau I) ou H₂SO₄ (tableau II), préalablement à l'introduction du polymère dans le bitume rend plus difficile la dissolution du polymère (cf. exemples 2, 6, 9 et 12) ;
- l'introduction de l'adjuvant minéral après gonflement du polymère dans le bitume perturbe la réticulation mise en oeuvre subséquemment, avec obtention de produits peu élastiques et formation d'asphaltènes insolubles (cf. exemples 3, 7, 10 et 13) ;
- l'introduction de l'adjuvant minéral une fois achevée la réticulation du mélange bitume/polymère, comme le propose l'invention (cf. exemples 4, 8, 11 et 14), conduit à l'obtention de produits homogènes et dont les caractéristiques, en particulier intervalle de plasticité et propriétés élastiques, sont nettement améliorées par rapport aux caractéristiques des compositions bitume/polymère réticulées au soufre, mais non traitées par l'adjuvant minéral (cf. exemples 1 et 5).

## Revendications

1. Procédé de préparation de compositions bitume/polymère à caractère multigrade renforcé, du type dans lequel on met en contact, en opérant à des températures comprises entre 100°C et 230°C et sous agitation pendant une durée d'au moins 10 minutes, un bitume ou mélange de bitumes, avec, comptés en poids du bitume ou mélange de bitumes, 0,5 % à 20 % d'un élastomère réticulable au soufre et un agent de couplage donneur de soufre en quantité propre à fournir une quantité de soufre libre représentant 0,1 % à 20 % du poids de l'élastomère réticulable au soufre dans le milieu réactionnel formé des ingrédients bitume ou mélange de bitumes, élastomère et agent de couplage, pour produire une composition réticulée au soufre, ledit procédé se caractérisant en ce qu'au milieu réactionnel résultant de la réticulation au soufre, maintenu à une température comprise entre 100°C et 230°C et sous agitation, on incorpore 0,005 % à 5%, en poids du bitume ou mélange de bitumes, d'un adjuvant minéral consistant en au moins un composé choisi dans le groupe formé par les acides phosphoriques, les acides boriques, l'acide sulfurique, les anhydrides desdits acides et l'acide chlorosulfurique et l'on maintient le milieu réactionnel renfermant l'adjuvant minéral à la température comprise entre 100°C et 230°C et sous agitation pendant une durée d'au moins 20 minutes.

2. Procédé selon la revendication 1, caractérisé en ce que la quantité d'adjuvant minéral incorporée au milieu réactionnel résultant de la réticulation au soufre, représente 0,01 % à 2 % en poids du bitume ou mélange de bitumes.

3. Procédé selon la revendication 1 ou 2, caractérisé en ce que l'adjuvant minéral consiste en au moins un composé choisi parmi H₃PO₄, P₂O₅, H₃BO₃, B₂O₃, H₂SO₄, SO₃ et HSO₃Cl.

4. Procédé selon l'une des revendications 1 à 3, caractérisé en ce que l'élastomère réticulable au soufre est utilisé en quantité représentant 0,7% à 15% en poids du bitume ou mélange de bitumes.

5. Procédé selon l'une des revendications 1 à 4, caractérisé en ce que l'agent de couplage donneur de soufre est utilisé en quantité propre à fournir une quantité de soufre libre représentant 0,5% à 10% du poids de l'élastomère réticulable au soufre.

6. Procédé selon l'une des revendications 1 à 5, caractérisé en ce que le bitume ou mélange de bitumes possède une viscosité cinématique à 100°C comprise entre 0,5 x 10⁻⁴ m²/s et 3 x 10⁻² m²/s.

7. Procédé selon la revendication 6, caractérisé en ce que ladite viscosité cinématique à 100°C est comprise entre 1 x 10⁻⁴ m²/s et 2 x 10⁻² m²/s.

8. Procédé selon la revendication 6 ou 7, caractérisé en ce que le bitume ou mélange de bitumes présente une pénétrabilité, définie suivant la norme NF T 66 004, comprise entre 5 et 500.

9. Procédé selon la revendication 8, caractérisé en ce que ladite pénétrabilité est comprise entre 10 et 400.

10. Procédé selon l'une des revendications 1 à 9, caractérisé en ce que l'élastomère réticulable au soufre est choisi parmi les copolymères statistiques ou séquencés de styrène et d'un diène conjugué.

11. Procédé selon la revendication 10, caractérisé en ce que le diène conjugué des copolymères statistiques ou séquencés de styrène et de diène conjugué est choisi parmi butadiène, isoprène, chloroprène, butadiène carboxylé et isoprène carboxylé.

12. Procédé selon la revendication 10 ou 11, caractérisé en ce que le copolymère de styrène et de diène conjugué renferme, en poids, 5 à 50 % de styrène.

13. Procédé selon l'une des revendications 10 à 12, caractérisé en ce que la masse moléculaire moyenne en poids du copolymère de styrène et de diène conjugué est comprise entre 10 000 et 600 000.

14. Procédé selon la revendication 13, caractérisé en ce que ladite masse moléculaire moyenne en poids est comprise entre 30 000 et 400 000.

15. Procédé selon l'une des revendications 1 à 14, caractérisé en ce que l'agent de couplage donneur de soufre est choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

16. Procédé selon la revendication 15, caractérisé en ce que l'agent de couplage donneur de soufre est choisi parmi les produits M, qui renferment, en poids, de 0 % à 100 % d'une composante A consistant en un ou plusieurs accélérateurs de vulcanisation donneurs de soufre et de 100 % à 0 % d'une composante B consistant en un ou plusieurs agents de vulcanisation choisis parmi le soufre élémentaire et les polysulfures d'hydrocarbyle, et les produits N, qui renferment une composante C consistant en un ou plusieurs accélérateurs de vulcanisation non donneurs de soufre et un produit M dans un rapport pondéral de la composante C au produit M allant de 0,01 à 1.

17. Procédé selon l'une des revendications 1 à 16, caractérisé en ce que sa mise en oeuvre consiste à :
- mettre en contact l'élastomère réticulable au soufre avec le bitume ou mélange de bitumes, en opérant à des températures comprises entre 100°C et 230°C et sous agitation, pendant une durée suffisante, de l'ordre de quelques dizaines de minutes à quelques heures, pour former un mélange homogène, puis
- incorporer au dit mélange l'agent de couplage donneur de soufre et maintenir le tout sous agitation à des températures comprises entre 100°C et 230°C et identiques ou non aux températures de mélange de l'élastomère avec le bitume ou mélange de bitumes, pendant une durée au moins égale à 10 minutes, pour former un produit de réaction constituant une composition bitume/polymère réticulée, et enfin
- incorporer la quantité désirée d'adjuvant minéral au dit produit de réaction, maintenu à une température comprise entre 100°C et 230°C et sous agitation et maintenir le milieu réactionnel renfermant l'adjuvant minéral à la température comprise entre 100°C et 230°C et sous agitation pendant une durée allant de 20 minutes à 5 heures, pour former la composition bitume/polymère à intervalle de plasticité élargi.

18. Procédé selon l'une des revendications 1 à 17, caractérisé en ce que le mélange réactionnel formé du bitume ou mélange de bitumes, de l'élastomère réticulable au soufre et de l'agent de couplage donneur de soufre, conduisant à la composition bitume/polymère réticulée que l'on soumet ensuite à l'action de l'adjuvant minéral, est additionné, à un moment quelconque de sa constitution, de 1 % à 40 %, en poids du bitume ou mélange de bitumes, d'un agent fluxant.

19. Procédé selon la revendication 18, caractérisé en ce que ledit agent fluxant consiste en une huile hydrocarbonée présentant un intervalle de distillation à pression atmosphérique, déterminé selon la norme ASTM D 86-67, compris entre 100°C et 600°C.

20. Procédé selon la revendication 19, caractérisé en ce que l'huile hydrocarbonée est choisie parmi les coupes pétrolières de caractère aromatique, les coupes pétrolières de caractère naphténo-aromatique, les coupes pétrolières de caractère naphténo-paraffinique, les coupes pétrolières de caractère paraffinique, les huiles de houille et les huiles d'origine végétale.

21. Procédé selon la revendication 19 ou 20, caractérisé en ce que l'élastomère réticulable au soufre et l'agent de couplage sont incorporés au bitume sous la forme d'une solution mère de ces produits dans l'huile hydrocarbonée.

22. Procédé selon la revendication 21, caractérisé en ce que la solution mère est préparée par mise en contact des ingrédients la composant, sous agitation, à des températures comprises entre 10°C et 170°C.

23. Procédé selon la revendication 21 ou 22, caractérisé en ce que la solution mère renferme, comptés en poids de l'huile hydrocarbonée, 5 % à 40 % d'élastomère réticulable au soufre et 0,02 % à 15 % d'agent de couplage donneur de soufre.

24. Procédé selon la revendication 23, caractérisé en ce que la solution mère renferme, comptés en poids de l'huile hydrocarbonée, 10 % à 35 % d'élastomère réticulable au soufre et 0,1 % à 5 % d'agent de couplage donneur de soufre.

25. Procédé selon l'une des revendications 21 à 24, caractérisé en ce que l'on met en contact, entre 100°C et 230°C et sous agitation, de 80 % à 95 % en poids de bitume ou mélange de bitumes avec 20 % à 5 % en poids de la solution mère, cette dernière renfermant, en poids de l'huile hydrocarbonée servant de solvant, 10 % à 35 % d'élastomère réticulable au soufre et 0,1 % à 5 % d'agent de couplage, puis on maintient le mélange ainsi obtenu sous agitation entre 100°C et 200°C, pendant une durée au moins égale à 10 minutes, pour former la composition bitume/polymère réticulée, que l'on soumet ensuite à l'action de l'adjuvant minéral.

26. Procédé selon l'une des revendications 1 à 25,caractérisé en ce que la composition bitume/polymère réticulé, résultant du traitement par l'adjuvant minéral, est diluée par un bitume ou mélange de bitumes ou par une seconde composition bitume/polymère réticulé traitée par l'adjuvant minéral et de teneur plus faible en élastomère réticulé.

## Patentansprüche

1. Verfahren zur Herstellung von Bitumen-Polymer-Zusammensetzungen mit erhöhter Mehrbereichsverwendbarkeit, bei dem man bei Temperaturen zwischen 100 und 230°C und unter Rühren während einer Zeitdauer von wenigstens 10 Minuten ein Bitumen oder ein Bitumengemisch mit, bezogen auf das Gewicht des Bitumens oder des Bitumengemisches, 0,5 bis 20 % eines mit Schwefel vernetzbaren Elastomers und einem schwefelspendenden Kupplungsmittel in einer Menge, die geeignet ist, in dem aus den Komponenten Bitumen oder Bitumengemisch, Elastomer und Kupplungsmittel gebildeten Reaktionsgemisch eine Menge an freiem Schwefel von 0,1 bis 20 %, bezogen auf das Gewicht des mit Schwefel vernetzbaren Elastomers, zu liefern, in Berührung bringt, um eine mit Schwefel vernetzte Zusammensetzung zu erzeugen, dadurch **gekennzeichnet,** daß man dem durch die Vernetzung mit Schwefel erhaltenen und bei einer Temperatur zwischen 100 und 230°C und unter Rühren gehaltenen Reaktionsgemisch 0,005 bis 5 %, bezogen auf das Gewicht des Bitumens oder des Bitumengemisches, eines anorganischen Zusatzes, bestehend aus wenigstens einer Verbindung, ausgewählt aus der Gruppe, gebildet durch Phosphorsäuren, Borsäuren, Schwefelsäure, Anhydride dieser Säuren und Chloroschwefelsäure, zusetzt und das den anorganischen Zusatz enthaltende Reaktionsgemisch bei einer Temperatur zwischen 100 und 230°C und unter Rühren während einer Zeitdauer von wenigstens 20 Minuten hält.

2. Verfahren nach Anspruch 1, dadurch **gekennzeichnet,** daß die Menge des anorganischen Zusatzes, den man dem Reaktionsgemisch zusetzt, das man durch die Vernetzung mit Schwefel erhält, 0,01 bis 2 %, bezogen auf das Gewicht des Bitumens oder des Bitumengemisches, beträgt.

3. Verfahren nach Anspruch 1 oder 2, dadurch **gekennzeichnet,** daß der anorganische Zusatz aus wenigstens einer Verbindung, ausgewählt unter H₃PO₄, P₂O₅, H₃BO₃, B₂O₃, H₂SO₄, SO₃ und HSO₃Cl, besteht.

4. Verfahren nach einem der Ansprüche 1 bis 3, dadurch **gekennzeichnet,** daß das mit Schwefel vernetzbare Elastomer in einer Menge von 0,7 bis 15 %, bezogen auf das Gewicht des Bitumens oder des Bitumengemisches, verwendet wird.

5. Verfahren nach einem der Ansprüche 1 bis 4, dadurch **gekennzeichnet,** daß das schwefelspendende Kupplungsmittel in einer Menge verwendet wird, die geeignet ist, eine Menge an freiem Schwefel von 0,5 bis 10 %, bezogen auf das Gewicht des mit Schwefel vernetzbaren Elastomers, zu liefern.

6. Verfahren nach einem der Ansprüche 1 bis 5, dadurch **gekennzeichnet,** daß das Bitumen oder das Bitumengemisch eine kinematische Viskosität bei 100°C von 0,5 x 10⁻⁴ m²/s bis 3 x 10⁻² m²/s besitzt.

7. Verfahren nach Anspruch 6, dadurch **gekennzeichnet,** daß die kinematische Viskosität bei 100°C zwischen 1 x 10⁻⁴ m²/s und 2 x 10⁻² m²/s liegt.

8. Verfahren nach Anspruch 6 oder 7, dadurch **gekennzeichnet,** daß das Bitumen oder das Bitumengemisch eine Penetrationszahl, definiert nach der Norm NF T 66 004, von 5 bis 500 aufweist.

9. Verfahren nach Anspruch 8, dadurch **gekennzeichnet,** daß die Penetrationszahl zwischen 10 und 400 liegt.

10. Verfahren nach einem der Ansprüche 1 bis 9, dadurch **gekennzeichnet,** daß das mit Schwefel vernetzbare Elastomer unter statistischen Copolymeren oder Blockcopolymeren aus Styrol und einem konjugierten Dien ausgewählt wird.

11. Verfahren nach Anspruch 10, dadurch **gekennzeichnet,** daß das konjugierte Dien der statistischen Copolymere oder Blockcopolymere aus Styrol und einem konjugierten Dien unter Butadien, Isopren, Chloropren, carboxyliertem Butadien und carboxyliertem Isopren ausgewählt wird.

12. Verfahren nach Anspruch 10 oder 11, dadurch **gekennzeichnet,** daß das Copolymer aus Styrol und einem konjugierten Dien 5 bis 50 Gew -% Styrol enthält.

13. Verfahren nach einem der Ansprüche 10 bis 12, dadurch **gekennzeichnet,** daß das Gewichtsmittel des Molekulargewichts des Copolymers aus Styrol und einem konjugierten Dien zwischen 10.000 und 600.000 liegt.

14. Verfahren nach Anspruch 13, dadurch **gekennzeichnet,** daß das Gewichtsmittel des Molekulargewichts zwischen 30.000 und 400.000 liegt.

15. Verfahren nach einem der Ansprüche 1 bis 14, dadurch **gekennzeichnet,** daß das schwefelspendende Kupplungsmittel aus der Gruppe, gebildet durch elementaren Schwefel, Kohlenwasserstoffpolysulfide, schwefelspendende Vulkanisationsbeschleuniger, Gemische dieser Stoffe untereinander und/oder mit nichtschwefelspendenden Vulkanisationsbeschleunigern ausgewählt wird.

16. Verfahren nach Anspruch 15, dadurch **gekennzeichnet,** daß das schwefelspendende Kupplungsmittel unter Stoffen M, die 0 bis 100 Gew.-% einer Komponente A, bestehend aus einem oder mehreren schwefelspendenden Vulkanisationsbeschleunigern, und 100 bis 0 Gew.-% einer Komponente B, bestehend aus einem oder mehreren Vulkanisationsmitteln, ausgewählt unter elementarem Schwefel und Kohlenwasserstoffpolysulfiden, enthalten, und Stoffen N, die eine Komponente C, bestehend aus einem oder mehreren nichtschwefelspendenden Vulkanisationsbeschleunigern, und einen Stoff M in einem Gewichtsverhältnis der Komponente C zum Stoff M von 0,01 bis 1 enthalten, ausgewählt wird.

17. Verfahren nach einem der Ansprüche 1 bis 16, dadurch **gekennzeichnet,** daß man
das mit Schwefel vernetzbare Elastomer mit dem Bitumen oder dem Bitumengemisch bei Temperaturen von 100 bis 230°C unter Rühren während einer ausreichenden Zeitdauer in der Größenordnung von wenigstens 10 Minuten bis einigen Stunden in Berührung bringt, um ein homogenes Gemisch zu bilden, dann
dem Gemisch das schwefelspendende Kupplungsmittel zusetzt und das Ganze unter Rühren bei Temperaturen zwischen 100 und 230°C, die gegebenenfalls mit den Temperaturen für das Mischen des Elastomers mit dem Bitumen oder dem Bitumengemisch identisch sind, während wenigstens 10 Minuten hält, um ein Reaktionsprodukt zu bilden, das eine vernetzte Bitumen-Polymer-Zusammensetzung darstellt, und schließlich
die gewünschte Menge an anorganischem Zusatz in das bei einer Temperatur zwischen 100 und 230°C und unter Rühren gehaltene Reaktionsprodukt einarbeitet und das den anorganischen Zusatz enthaltende Reaktionsgemisch bei einer Temperatur zwischen 100 und 230°C und unter Rühren während 20 Minuten bis 5 Stunden hält, um die Bitumen-Polymer-Zusammensetzung mit erweitertem Plastizitätsbereich zu bilden.

18. Verfahren nach einem der Ansprüche 1 bis 17, dadurch **gekennzeichnet,** daß das aus dem Bitumen oder dem Bitumengemisch, dem mit Schwefel vernetzbaren Elastomer und dem schwefelspendenden Kupplungsmittel gebildete Reaktionsgemisch, das zur vernetzten Bitumen-Polymer-Zusammensetzung führt, auf die man dann den anorganischen Zusatz einwirken läßt, zu einem beliebigen Zeitpunkt seiner Bildung mit 1 bis 40 %, bezogen auf das Geiwcht des Bitumens oder des Bitumengemisches, eines Verflüssigungsmittels versetzt wird.

19. Verfahren nach Anspruch 18, dadurch **gekennzeichnet,** daß das Verflüssigungsmittel aus einem Kohlenwasserstofföl mit einem Destillationsbereich bei Atmosphärendruck, ermittelt gemäß der ASTM-Norm D 86-67, zwischen 100 und 600°C besteht.

20. Verfahren nach Anspruch 19, dadurch **gekennzeichnet,** daß das Kohlenwasserstofföl unter aromatischen Erdölfraktionen, naphthenaromatischen Erdölfraktionen, naphthenparaffinischen Erdölfraktionen, paraffinischen Erdölfraktionen, Steinkohleölen und Pflanzenölen ausgewählt wird.

21. Verfahren nach Anspruch 19 oder 20, dadurch **gekennzeichnet,** daß das mit Schwefel vernetzbare Elastomer und das Kupplungsmittel in das Bitumen in Form einer Mutterlauge dieser Produkte im Kohlenwasserstofföl eingearbeitet werden.

22. Verfahren nach Anspruch 21, dadurch **gekennzeichnet,** daß die Mutterlauge durch Kontaktierung der sie bildenden Komponenten unter Rühren bei Temperaturen zwischen 10 und 170°C hergestellt wird.

23. Verfahren nach Anspruch 21 oder 22, dadurch **gekennzeichnet,** daß die Mutterlauge, bezogen auf das Gewicht des Kohlenwasserstofföls, 5 bis 40 % mit Schwefel vernetzbares Elastomer und 0,02 bis 15 % schwefelspendendes Kupplungsmittel enthält.

24. Verfahren nach Anspruch 23, dadurch **gekennzeichnet,** daß die Mutterlauge, bezogen auf das Gewicht des Kohlenwasserstofföls, 10 bis 35 % mit Schwefel vernetzbares Elastomer und 0,1 bis 5 % schwefelspendendes Kupplungsmittel enthält.

25. Verfahren nach einem der Ansprüche 21 bis 24, dadurch gekennzeichnet, daß man 80 bis 95 Gew.-% des Bitumens oder des Bitumengemisches mit 20 bis 5 Gew.-% der Mutterlauge bei 100 bis 230°C und unter Rühren in Berührung bringt, wobei letztere, bezogen auf das Gewicht des als Lösungsmittel dienenden Kohlenwasserstofföls, 10 bis 35% mit Schwefel vernetzbares Elastomer und 0,1 bis 5% Kupplungsmittel enthält, wonach man das so erhaltene Gemisch unter Rühren bei 100 bis 200°C während wenigstens 10 Minuten hält, um die vernetzte Bitumen-Polymer-Zusammensetzung zu bilden, auf die man dann den anorganischen Zusatz einwirken läßt.

26. Verfahren nach einem der Ansprüche 1 bis 25, dadurch **gekennzeichnet,** daß die durch Behandlung mit dem anorganischen Zusatz erhaltene vernetzte Bitumen-Polymer-Zusammensetzung mit einem Bitumen oder einem Bitumengemisch oder mit einer zweiten mit einem anorganischen Zusatz behandelten und einen geringeren Gehalt an vernetztem Elastomer aufweisenden Bitumen-Polymer-Zusammensetzung verdünnt wird.

## Claims

1. Process for the preparation of bitumen/polymer compositions of reinforced multigrade nature, of the type in which a bitumen or a mixture of bitumens is brought into contact, at temperatures of from 100°C to 230°C and with stirring, for a period of at least 10 minutes, with from 0.5% to 20% by weight, based on the bitumen or mixture of bitumens, of an elastomer that is crosslinkable by means of sulphur, and a coupling agent yielding sulphur in an amount that will supply a quantity of free sulphur that represents from 0.1% to 20% of the weight of the elastomer crosslinkable by means of sulphur in the reaction medium consisting of the ingredients bitumen or mixture of bitumens, elastomer and coupling agent, in order to produce a composition that has been crosslinked by means of sulphur, the said process being characterised in that there is incorporated into the reaction medium resulting from the crosslinking by means of sulphur, which is maintained at a temperature of from 100°C to 230°C, with stirring, from 0.005% to 5% by weight, based on the bitumen or mixture of bitumens, of a mineral adjuvant that consists of at least one compound selected from the group consisting of phosphoric acids, boric acids, sulphuric acid, the anhydrides of the said acids, and chlorosulphuric acid, and the reaction medium containing the mineral adjuvant is maintained at the temperature of from 100°C to 230°C, with stirring, for a period of at least 20 minutes.

2. Process according to claim 1, characterised in that the amount of mineral adjuvant incorporated into the reaction medium resulting from the crosslinking by means of sulphur represents from 0.01% to 2% by weight of the bitumen or mixture of bitumens.

3. Process according to claim 1 or 2, characterised in that the mineral adjuvant consists of at least one compound selected from H₃PO₄, P₂O₅, H₃BO₃, B₂O₃, H₂SO₄, SO₃ and HSO₃Cl.

4. Process according to one of claims 1 to 3, characterised in that the elastomer crosslinkable by means of sulphur is used in an amount that represents from 0.7% to 15% by weight of the bitumen or mixture of bitumens.

5. Process according to one of claims 1 to 4, characterised in that the coupling agent yielding sulphur is used in an amount that will supply a quantity of free sulphur that represents from 0.5% to 10% of the weight of the elastomer crosslinkable by means of sulphur.

6. Process according to one of claims 1 to 5, characterised in that the bitumen or mixture of bitumens has a kinematic viscosity at 100°C of from 0.5 x 10⁻⁴ m²/s to 3 x 10⁻² m²/s.

7. Process according to claim 6, characterised in that the said kinematic viscosity at 100°C is from 1 x 10⁻⁴ m²/s to 2 x 10⁻² m²/s.

8. Process according to claim 6 or 7, characterised in that the bitumen or mixture of bitumens has a penetrability, defined in accordance with standard NF T 66 004, of from 5 to 500.

9. Process according to claim 8, characterised in that the said penetrability is from 10 to 400.

10. Process according to one of claims 1 to 9, characterised in that the elastomer crosslinkable by means of sulphur is selected from the random or block copolymers of styrene and a conjugated diene.

11. Process according to claim 10, characterised in that the conjugated diene of the random or block copolymers of styrene and a conjugated diene is selected from butadiene, isoprene, chloroprene, carboxylated butadiene and carboxylated isoprene.

12. Process according to claim 10 or 11, characterised in that the copolymer of styrene and a conjugated diene contains from 5 to 50% by weight of styrene.

13. Process according to one of claims 10 to 12, characterised in that the average molecular mass by weight of the copolymer of styrene and a conjugated diene is from 10,000 to 600,000.

14. Process according to claim 13, characterised in that the said average molecular mass by weight is from 30,000 to 400,000.

15. Process according to one of claims 1 to 14, characterised in that the coupling agent yielding sulphur is selected from the group consisting of elemental sulphur, hydrocarbon polysulphides, vulcanisation accelerators yielding sulphur, mixtures of such products with one another and/or with vulcanisation accelerators that do not yield sulphur.

16. Process according to claim 15, characterised in that the coupling agent yielding sulphur is selected from the products M, which contain, by weight, from 0% to 100% of a component A consisting of one or more vulcanisation accelerators yielding sulphur, and from 100% to 0% of a component B consisting of one or more vulcanising agents selected from elemental sulphur and hydrocarbon polysulphides, and the products N, which contain a component C consisting of one or more vulcanisation accelerators that do not yield sulphur and a product M in a weight ratio of component C to product M that ranges from 0.01 to 1.

17. Process according to one of claims 1 to 16, characterised in that the implementation thereof comprises:
- bringing the elastomer crosslinkable by means of sulphur into contact with the bitumen or mixture of bitumens, the operation being carried out at temperatures of from 100°C to 230°C and with stirring, for a sufficient period of time, of the order of from several tens of minutes to several hours, to form a homogeneous mixture, and then
- incorporating into the said mixture the coupling agent yielding sulphur and maintaining the whole, with stirring, at temperatures of from 100°C to 230°C, which may or may not be identical to the temperatures at which the elastomer was mixed with the bitumen or mixture of bitumens, for a period of at least 10 minutes, to form a reaction product that is a bitumen/crosslinked polymer composition, and finally
- incorporating the desired amount of mineral adjuvant into the said reaction product, which is maintained at a temperature of from 100°C to 230°C, with stirring, and maintaining the reaction medium containing the mineral adjuvant at the temperature of from 100°C to 230°C, with stirring, for a period of time ranging from 20 minutes to 5 hours, to form the bitumen/polymer composition having an extended plasticity range.

18. Process according to one of claims 1 to 17, characterised in that, to the reaction mixture consisting of the bitumen or mixture of bitumens, the elastomer crosslinkable by means of sulphur, and the coupling agent yielding sulphur, resulting in the bitumen/crosslinked polymer composition, which is then subjected to the action of the mineral adjuvant, there is added, at any time during the formation thereof, from 1% to 40% by weight, based on the bitumen or mixture of bitumens, of a flux agent.

19. Process according to claim 18, characterised in that the said flux agent consists of a hydrocarbon oil having a distillation range at atmospheric pressure, determined in accordance with standard ASTM D 86-67, comprised between 100°C and 600°C.

20. Process according to claim 19, characterised in that the hydrocarbon oil is selected from petroleum fractions of aromatic nature, petroleum fractions of naphtheno-aromatic nature, petroleum fractions of naphtheno-paraffinic nature, petroleum fractions of paraffinic nature, coal-oils and oils of vegetable origin.

21. Process according to claim 19 or 20, characterised in that the elastomer crosslinkable by means of sulphur and the coupling agent are incorporated into the bitumen in the form of a mother solution of those products in the hydrocarbon oil.

22. Process according to claim 21, characterised in that the mother solution is prepared by bringing into contact the ingredients forming it, with stirring, at temperatures comprised between 10°C and 170°C.

23. Process according to claim 21 or 22, characterised in that the mother solution contains, based on the hydrocarbon oil, from 5% to 40% by weight of elastomer crosslinkable by means of sulphur and from 0.02% to 15% by weight of coupling agent yielding sulphur.

24. Process according to claim 23, characterised in that the mother solution contains, based on the hydrocarbon oil, from 10% to 35% by weight of elastomer crosslinkable by means of sulphur and from 0.1% to 5% by weight of coupling agent yielding sulphur.

25. Process according to one of claims 21 to 24, characterised in that there are brought into contact, at from 100°C to 230°C and with stirring, from 80% to 95% by weight of bitumen or a mixture of bitumens and from 20% to 5% by weight of the mother solution, the latter containing, based on the weight of the hydrocarbon oil serving as solvent, from 10% to 35% of elastomer crosslinkable by means of sulphur and from 0.1% to 5% of coupling agent, and the mixture so obtained is then stirred at from 100°C to 200°C for at least 10 minutes to form the bitumen/crosslinked polymer composition, which is then subjected to the action of the mineral adjuvant.

26. Process according to one of claims 1 to 25, characterised in that the bitumen/crosslinked polymer composition resulting from the treatment with the mineral adjuvant is diluted with a bitumen or a mixture of bitumens or with a second bitumen/crosslinked polymer composition treated with the mineral adjuvant and having a lower content of crosslinked elastomer.
